# FASCICULE DE BREVET EUROPEEN

(11) **EP 0 377 241 B1**
(45) Date de publication et mention de la délivrance du brevet: **15.03.1995**
(21) Numéro de dépôt: 89203257.4
(22) Date de dépôt: 20.12.1989
(51) Int. Cl.: G06F 7/58, H04N 7/167, H04L 9/26

(54) **Dispositif générateur de séquence pseudo-aléatoire**
Pseudozufallsreihengenerator
Pseudo-random sequence generator

(30) Priorité: 30.12.1988 FR 8817499
(43) Date de publication de la demande: 11.07.1990
(73) Titulaire: PHILIPS ELECTRONIQUE GRAND PUBLIC, 92150 Suresnes (FR); Philips Electronics N.V., 5621 BA Eindhoven (NL)
(72) Inventeur: Antoine, Patrick, F-75007 Paris (FR); Quisquater, Jean-Jacques, F-75007 Paris (FR)
(74) Mandataire: Caron, Jean

(56) Documents cités:
- EP-A- 0 119 972
- EP-A- 0 246 714
- FR-A- 1 532 396

## Description

La présente invention concerne un dispositif générateur de séquence pseudo-aléatoire, comprenant deux registres à décalage dits de base montés en multiplicateurs, les décalages étant commandés par les impulsions d'une horloge, registres dont le contenu initial est prédéterminé par une clé interne, et qui sont rebouclés l'un sur l'autre, c'est-à-dire qu'il existe une liaison entre la sortie de l'un et l'entrée de l'autre et vice-versa, un organe modifieur étant inséré dans une de ces liaisons.

Un tel dispositif est connu de EP-A-0 119 972. Le dispositif décrit par ce document comporte plusieurs couples de registres dont les sorties sont combinées dans un circuit logique. Dans chaque couple, les registres sont rebouclés l'un sur l'autre avec un organe modifieur inséré dans la boucle, à savoir un commutateur qui a pour effet que, soit le registre principal est rebouclé sur lui-même, soit il est rebouclé via le deuxième registre. En outre le deuxième registre est "perturbé" du fait que l'horloge lui est fournie par à coups en fonction d'un comptage de bits en sortie.

En outre d'autres documents décrivent des techniques de la même famille. Le document FR-A-1 532 396 décrit un dispositif qui comporte deux registres à décalage simples, c'est-à-dire non montés en multiplicateurs, munis chacun d'éléments logiques modifieurs dans une boucle allant de leur sortie vers leur entrée, et dans lequel la sortie d'un registre agit sur un modifieur de l'autre. Le document EP-A-0 246 714 décrit le dispositif bien connu qui est à la base du cryptage employé dans les standards D2-MAC et Eurocrypt, comportant deux registres montés en multiplicateurs, qui n'ont aucune liaison entre eux, et dont les sorties sont multiplexées l'une par l'autre pour fournir une séquence pseudo-aléatoire.

Des problèmes majeurs, en matière de générateurs pseudo-aléatoires, dits GPA, sont les suivants :
- l'observabilité doit être réduite. On entend par là qu'il doit être difficile de découvrir comment le GPA fonctionne par observation des signaux de sortie. Dans le cas d'un générateur linéaire, de degré n, il suffit d'observer 2n-1 éléments consécutifs d'une séquence pour caractériser complètement le générateur. Dans le cas de générateurs non linéaires, il faut observer beaucoup plus d'éléments.
- On peut tenter de connaître la structure du GPA par une simulation informatique en temps réel des polynomes multiplicateurs, de leurs rebouclages, et de leur interconnexion, en essayant tour à tour différentes structures. Il faut rendre cette simulation suffisamment longue pour qu'elle devienne irréalisable en pratique. Néanmoins il ne faut pas que le dispositif matériel soit trop compliqué à réaliser. Là encore, un générateur non linéaire est plus difficile à simuler.
- Les séquences fournies doivent avoir un caractère suffisamment aléatoire, c'est-à-dire obéir aux mêmes lois qu'une séquence réellement aléatoire (où par exemple, la proportion statistique de bits à 1 et à 0 est de 50%). Par ailleurs la durée de cycle, c'est-à-dire la durée avant qu'on ne retrouve à nouveau une séquence identique (en supposant qu'on ne réinitialise pas les contenus) doit être suffisamment longue. Dans le cas des générateurs linéaires la durée peut être maximale et constante et les séquences sont statistiquement aléatoires. Au contraire, avec des non linéarités, la durée d'un cycle est variable et il y a possibilité de dégénérescence entraînant l'apparition de cycles trop courts et/ou de séquences statistiquement non aléatoires.

L'invention a pour but de fournir un GPA qui réalise le meilleur compromis entre les avantages contradictoires des générateurs linéaires et non linéaires. Il utilise des générateurs linéaires modifiés par des opérateurs non linéaires controlés de façon telle qu'ils entraînent peu de dégénérescence, ni de propriétés statistiquement non aléatoires.

A cet effet, dans le dispositif selon l'invention qui est défini dans la revendication 1, l'organe modifieur est une porte qui peut forcer des zéros dans au moins une partie de la boucle et qui est commandée par un signal issu d'un registre à décalage rebouclé sur lui-même et indépendant des deux premiers. Avantageusement le dispositif comporte deux registres indépendants des deux premiers, et la porte est une porte ET commandée par un signal issu d'une porte OU aux entrées de laquelle sont amenés des bits venant chacun d'un des deux registres indépendants.

En outre la complexité est. encore accrue, toujours sans dégénérescence sensible, si les registres indépendants sont modifiés l'un par l'autre, et si en outre cette modification est faite avec insertion d'au moins un élément non linéaire, notamment un compteur à bascule.

Une deuxième caractéristique importante du dispositif est qu'au moins l'un des deux registres de base est modifié linéairement par insertion de bits provenant d'une source extérieure au registre à modifier. On rend ainsi plus difficile l'observation, tout en conservant les avantages des générateurs linéaires.

Chaque bit modificateur peut avantageusement provenir d'une porte ET aux entrées de laquelle sont amenés des bits provenant de deux registres indépendants différents.

Avantageusement ces deux registres indépendants sont les mêmes que ceux qui commandent l'organe modifieur de la boucle des registres de base.

Alors que dans le dispositif décrit par le document EP-A-0 119 972, la séquence pseudo-aléatoire résulte d'une combinaison logique des bits de plusieurs couples de registres, dans le dispositif selon l'invention, la sortie de la séquence pseudoaléatoire s'effectue sous forme parallèle en prélevant plusieurs bits à la fois à différents étages de l'un des registres à décalage de base. On obtient ainsi des caractéristiques très performantes, tout en n'utilisant au total que quatre registres.

Les performances sont encore accrues, du fait que les bits de sortie sont modifiés linéairement, à partir de bits issus d'un ou plusieurs registre(s) indépendant(s). Ceci a pour avantage de compliquer fortement une éventuelle analyse par corrélation basée sur l'observation des sorties.

En outre, dans le chemin d'au moins un bit issu du ou des registre(s) indépendant(s), est avantageusement inséré un élément non linéaire.

Lorsque le dispositif est utilisé pour le chiffrage d'une émission de télévision, une horloge à fréquence plus élevée est appliquée durant certaines périodes où la fourniture de codes n'est pas nécessaire, la sortie de la séquence étant alors masquée, et la durée pendant laquelle cette horloge à fréquence plus élevée est appliquée est elle-même déterminée de façon pseudo-aléatoire. Ceci présente l'avantage que le nombre de coups d'horloge est beaucoup plus grand que le nombre de sorties observables, ce qui réduit dans le rapport inverse l'observabilité d'états consécutifs.

La description qui va suivre, en regard des dessins annexés décrivant des exemples non limitatifs fera bien comprendre comment l'invention peut être réalisée.

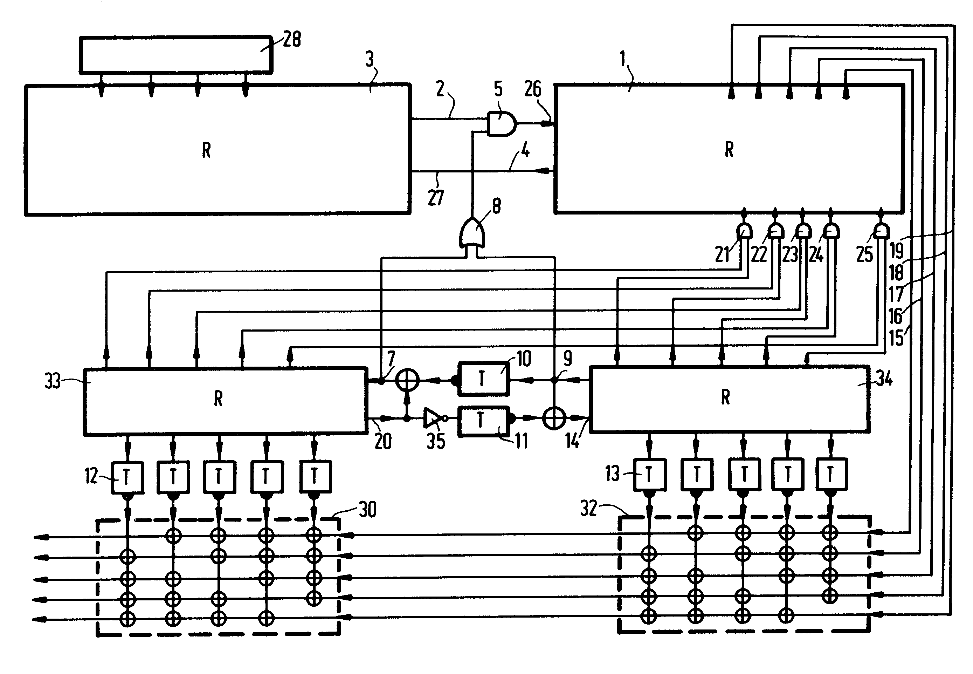

La figure unique est un schéma d'ensemble du dispositif.

Le dispositif est utilisé dans un système de télévision cryptée, pour engendrer un mot pseudo-aléatoire de huit bits qui définit par exemple un point de coupure dans une ligne d'image. Huit bits sont donc nécessaires à chaque ligne, c'est-à-dire toutes les 64 microsecondes. Contrairement au système prévu dans la norme D2MAC-paquet, qui comporte une horloge à huit fois la fréquence ligne et fournit en série huit bits par ligne, le présent système fournit huit bits en parallèle et fonctionne, au moins pendant les périodes où la fourniture des codes est nécessaire, avec une horloge qui fournit une seule impulsion par ligne. A la différence du système décrit dans le document EP-A-0 119 972, où les impulsions d'horloge peuvent être interrompues semi-aléatoirement par des portes, dans le présent système tous les éléments sont activés ensemble et régulièrement par l'horloge : il est donc inutile de la représenter sur la figure.

Les générateurs de fréquences pseudo-aléatoires sont basés sur l'emploi de registres à décalage, qui comportent une connexion de bouclage ramenant un bit lié à la séquence de sortie vers des modifieurs insérés chaque fois entre deux étages du registre. Des agencements de ce type peuvent constituer des registres dits multiplicateurs, faisant référence à l'analogie mathématique selon laquelle ces registres réalisent la multiplication d'une séquence de bits fournie en série à l'entrée, par un polynome.

Tous les registres du présent dispositif sont chargés au départ par des mots créés au moyen d'un algorithme partant d'une clé interne associée à un chiffre transmis par l'émetteur. Ceci ne fait pas partie de l'invention.

Le dispositif est basé sur un registre multiplicateur 1 appelé registre de base, dont est tirée la séquence pseudoaléatoire. Le polynome correspondant est d'un degré relativement élevé, par exemple compris entre 40 et 70; le cycle de base est ainsi relativement long. Ce registre est un registre du type à modifieurs linéaires insérés entre les étages du registre (pour mémoire, il existe une variante où les modifieurs sont placés dans une connexion de rebouclage). Par "modifieurs linéaires", on entend que le bit modifieur est appliqué à un élément réalisant une addition modulo2 (OU exclusif) inséré dans la boucle.

Un deuxième registre 3 est prévu. On l'appelera deuxième registre de base parcequ'il est couplé avec le premier. Ce registre est aussi monté en multiplicateur avec des modifieurs linéaires insérés entre certains étages. Il peut avoir une degré beaucoup plus faible, par exemple compris entre 5 et 20.

Au lieu que chacun de ces deux registres soit rebouclé sur lui-même de façon habituelle, la connexion de rebouclage de chacun d'eux est ouverte, et l'autre registre y est inséré. Ainsi la sortie 2 du registre 3 est reliée à l'entrée 26 du registre 1, et la sortie 4 de ce dernier est reliée à l'entrée 27 du registre 3. En outre, la sortie 2 est amenée à l'entrée 26 via une porte ET 5 à deux entrées,qui peut forcer des zéros dans la partie de boucle qui est à droite sur la figure.

La deuxième entrée de la porte ET est commandée par un signal issu de deux registres à décalage 33,34 indépendants des deux premiers.

Ces deux registres 33 et 34 sont rebouclés directement, chacun sur lui-même, la sortie 20 du registre 33 étant refermée vers son entrée 7, et de même la sortie 9 du registre 34 vers son entrée 14.

Les registres 33 et 34 ont par exemple des degrés plus faibles que ceux du polynome de base, et voisins l'un de l'autre, de l'ordre de 25 à 35.

A la sortie 9 du registre 34 est connecté un compteur à bascule 10 qui est un élément non linéaire. On appelle ici compteur à bascule un compteur dont la sortie change d'état (effet de bascule) lorsqu'un nombre déterminé de bits à 1 a été compté à son entrée. Tous les compteurs à bascule du dispositif sont initialisés au départ. La sortie de la bascule 10 est combinée avec la sortie 20 du registre 33 dans une porte "OU exclusif" dont la sortie est appliquée à l'entrée 7 du registre 33. Une disposition symétrique est obtenue grâce au compteur à bascule 11 entre la sortie 20 du registre 33 et l'entrée 14 du registre 34. Ainsi les deux registres 33 et 34 sont modifiés l'un par l'autre, et les compteurs perturbent de temps en temps la séquence. Si le compteur est un compteur par n, on a en moyenne tous les 2n coups d'horloge une inversion des bits futurs de la séquence. Les compteurs 10 et 11 ont des valeurs de comptage inégales, et peu élevées, par exemple comprises entre 4 et 12.

En outre, un inverseur 35 est inséré dans l'entrée de l'un des compteurs, ici le compteur 11. Ceci a pour but que l'un des compteurs compte des zéros et l'autre des "un", afin d'éviter un éventuel autoblocage : s'il y a beaucoup de zéros, le compteur 11 bascule et change la suite de la séquence.

La seconde entrée de la porte ET 5, insérée entre les registres de base 3 et 1, est reliée à la sortie d'une porte OU 8. Une entrée de cette porte 8 est reliée à l'entrée 7 du registre 33 et l'autre entrée est reliée à la sortie 9 du registre 34. Bien entendu elles pourraient aussi bien, en variante, être reliées à n'importe quel autre étage de ces registres, sans changer fondamentalement le principe de fonctionnement.

Aux entrées de la porte OU 8 sont présentées des séquences dans lequelles les 1 et les 0 sont équiprobables. Du fait de la fonction OU, les bits en sortie de la porte 8 sont à 1 pour les trois quarts (statistiquement). De ce fait, la porte ET 5 est fermée en moyenne pendant seulement un quart du temps : les séquences sont ainsi peu modifiées et on ne risque donc pas d'obtenir de longues séries de zéros.

Des bits issus d'un élément 28 qui fournit un chiffre provenant d'un comptage de trames de télévision sont introduits dans le corps du registre 3, et agissent sur des modifieurs linéaires (non représentés) ; la modification résultante a pour but d'éviter que la sortie soit périodique même si on réintroduit périodiquement la même clé de départ.

Le registre 1 est modifié, lui aussi, mais de façon plus complexe. Le registre comporte cinq modifieurs linéaires (qui ne sont pas représentés pour ne pas compliquer la figure, leur disposition étant bien connue) à chacun desquels est amené un bit modificateur issu d'une porte ET 24 à 25.

Les points d'insertion laissent entre eux un certain nombre d'étages de registre. Les points d'insertion des bits modificateurs sont disposés de façon à laisser entre eux des blocs de registres dont les degrés sont différents et autant que faire se peut, premiers entre eux. Par exemple si le registre par a un degré 67, un bloc de degré 19 peut être prévu entre la sortie 4 et le point d'insertion du bit sortant de la porte 21, puis un bloc de degré 13 entre les points d'application de la porte 21 et de la porte 22, puis un bloc de degré 11 entre les points d'applications des portes 22 et 23, un bloc de degré 7 entre les points d'application des portes 23 et 24, un bloc de degré 17 entre les points d'application des portes 24 et 25, la sortie de la porte 25 étant elle même appliquée directement à l'entrée du registre.

La somme des degrés des blocs partiels, 19 + 13 + 7 + 11 + 17 donne bien 67 qui est ici le degré du registre. Les degrés des blocs sont tous différents et premiers entre eux. Il ne faut néanmoins pas exclure à priori d'autres degrés de registre pour lesquels on ne pourrait pas trouver des valeurs qui soient toutes premières entre elles.

Chacune des portes ET 21 à 25 comporte deux entrées. Pour chaque porte, une des entrées est reliée à une sortie intermédiaire du registre 33 et l'autre à une sortie intermédiaire du registre 34. On appelle sortie intermédiaire une connexion branchée entre deux étages à l'intérieur (non représenté) d'un registre. Beaucoup d'entrées ou sorties de registres ne sont pas référencées individuellement, pour ne pas compliquer la figure, des flèches étant suffisantes pour indiquer s'il s'agit de sorties ou d'entrées.

Des portes de type ET sont choisies ici de préférence, pour la raison suivante : avec des séquences de 1 et 0 équiprobables en entrée, chacune des portes ET 21 à 25 fournit des bits à 1 seulement pour un quart des bits (statistiquement). Comme il y a cinq modifieurs, on a donc 5/4 chances de modifier, c'est-à-dire à peu près une chance par coup d'horloge.

De préférence les entrées d'une même porte sont reliées à des sorties intermédiaires de rang très différent dans le registre 33 et dans le registre 34. Par exemple une porte peut être reliée à la sortie de rang 5 du registre 33 et à la sortie de rang 26 du registre 34. Bien entendu il y a une très grande variété de possibilités équivalentes, c'est pourquoi il est superflu d'indiquer pour chaque porte ET a quels rangs des registres elle est reliée. Les sorties intermédiaires ne sont pas, de préférence, équidistantes.

Les deux registres 33, 34 ont donc plusieurs façons d'influencer les deux registres 3, 1. Au contraire, il n'y a aucune liaison en retour des registres 3, 1 vers les registres 33, 34. Ceux-ci sont donc indépendants des registres de base.

Dans le registre 1 sont prévues cinq sorties intermédiaires 15 à 19, qui fournissent une séquence pseudo-aléatoire de cinq bits en parallèle.

Il a été indiqué plus haut que huit bits étaient désirés. Il n'y a ici que cinq sorties. L'analyse par corrélation serait plus facile si l'on disposait d'un plus grand nombre de connexions, qui sont en quelque sorte un "regard" sur le registre. C'est pourquoi on ne prélève que cinq bits, et on les expanse à huit par la suite. Cette expansion ne fait pas partie de l'invention.

Les points de prélèvement de la séquence pseudoaléatoire, liés aux connexions 15 à 19, d'une part, et les points d'introduction des bits modificateurs liés aux sorties des portes 21 à 25 d'autre part, sont disposés en quinconce, c'est-à-dire que si l'on considère les blocs dont les degrés sont premiers entre eux, qui ont été décrits plus haut, chacun d'eux fournit une des sorties, prélevée entre deux de ses étages.

Une ultime précaution pour diminuer encore l'observabilité consiste à modifier la séquence prélevée sur le registre 1, de façon linéaire, à partir de bits prélevés sur des sorties intermédiaires des deux registres indépendants 33, 34. A cet effet, sur les cinq connexions 15 à 19 sont insérées des modifieurs linéaires, c'est-à-dire des portes "OU exclusif", commandés chacun par une sortie de registre. De tels modifieurs sont symbolisés par un signe + entouré d'un cercle. Un groupe 32 de modifieurs est associé au registre 34, et un groupe 30 est associé au registre 33. Les sorties intermédiaires des registres 33, 34 utilisées ici ne sont pas les mêmes que celles reliées aux portes 21 à 25. Ces deux groupes de sorties peuvent par exemple, eux aussi, être disposés en quinconce.

En outre, dans chaque connexion de sortie de registre est inséré un compteur à bascule 12 ou 13. Tous ceux associés à un même registre ont de préférence des valeurs de comptage différentes et premières entre elles, par exemple 2, 5, 7, 9, 13 ou 3, 5, 7, 11, 13, etc... Chaque sortie de compteur commande quatre portes modifiant donc quatre parmi les cinq connexions 15-19. A chaque fois, la connexion non modifiée est différente : par exemple pour le registre 34, la première sortie la plus à gauche sur la figure ne modifie pas la connexion 15, la seconde sortie ne modifie pas la connexion 16, et ainsi de suite, la cinquième sortie la plus à droite ne modifie pas la connexion 19. Ainsi la modification est linéaire.

Durant certaines périodes où la fourniture de codes n'est pas nécessaire, par exemple durant les retours de trame, une horloge à fréquence plus élevée est appliquée. Cette horloge (non représentée) peut être par exemple obtenue par multiplication de la fréquence ligne au moyen d'un oscillateur à boucle à verrouillage de phase.

Les sorties sont masquées pendant les retours de trame, afin d'empêcher l'observation de la séquence pendant ces périodes.

Pour déterminer la durée pendant laquelle est appliquée l'horloge à fréquence plus élevée, on initialise un décompteur avec un nombre pseudo-aléatoire. Ce dernier est obtenu en prélevant quelques bits internes au GPA. Ensuite, le décompteur décompte à la fréquence de l'horloge jusqu'à zéro, après quoi l'horloge à fréquence plus élevée est arrêtée et on attend le début de l'image pour repartir avec l'horloge à fréquence ligne.

Avec la structure décrite ci-dessus et la façon selon laquelle les non linéarités (à savoir les portes ET et les compteurs à bascule) sont disposées, le système est très complexe et néanmoins le risque de dégénérescence est faible.

## Revendications

1. Dispositif générateur de séquence pseudo-aléatoire, comprenant deux premiers registres à décalage dits de base (1,3) montés en multiplicateurs, les décalages étant commandés par les impulsions d'une horloge, les deux premiers registres, dont le contenu initial est prédéterminé par une clé interne, sont rebouclés l'un sur l'autre, c'est-à-dire qu'il existe une liaison entre la sortie de l'un (2) et l'entrée de l'autre (26) et vice-versa (4,27), un organe modifieur (5) étant inséré dans une de ces liaisons, caractérisé en ce que l'organe modifieur est une porte (5) qui peut forcer des zéros dans une partie de la boucle et qui est commandée par un signal issu d'au moins un deuxième registre à décalage (33) rebouclé sur lui-même et indépendant des deux premiers registres.

2. Dispositif selon la revendication 1, caractérisé en ce qu'il comporte le deuxième registre (33) et un troisième registre (34), tous les deux indépendants des deux premiers registres, et en ce que la porte (5) est une porte ET commandée par un signal issu d'une porte OU (8) aux entrées de laquelle sont amenés des bits venant chacun d'un du deuxième (33) et du troisième registre (34).

3. Dispositif selon la revendication 2, caractérisé en ce que le deuxième (33) et le troisième registre (34) sont modifiés l'un par l'autre.

4. Dispositif selon la revendication 3, caractérisé en ce que la modification du deuxième (33) et du troisième registre (34) l'un par l'autre est faite avec insertion d'au moins un élément non linéaire (10,11).

5. Dispositif selon la revendication 4, caractérisé en ce que l'élément non linéaire est un compteur à bascule (T).

6. Dispositif selon la revendication 5, caractérisé en ce qu'il y a deux compteurs à bascule (10,11) et qu'un inverseur (35) est disposé en série avec un des compteurs (11).

7. Dispositif selon l'une quelconque des revendications précédentes, caractérisé en ce qu'au moins l'un des deux premiers registres (1) est modifié linéairement par insertion de bits (21-25) provenant d'une source extérieure au premier registre à modifier.

8. Dispositif selon la revendication précédente, caractérisé en ce que les points d'insertion des bits modificateurs sont disposés de façon à laisser entre eux des blocs de premier registre à modifier (1) dont les degrés sont différents et autant que faire se peut, premiers entre eux.

9. Dispositif selon la revendication 7, caractérisé en ce que la dite source extérieure au premier registre à modifier est constituée par le dit deuxième (33) et/ou troisième registre (34).

10. Dispositif selon la revendication précédente, caractérisé en ce que chaque bit modificateur est issu d'une porte ET (21-25) aux entrées de laquelle sont amenés un bit provenant du deuxième registre (33) et un bit provenant du troisième registre (34).

11. Dispositif selon l'une quelconque des revendications précédentes, utilisé pour le chiffrage d'une émission de télévision, caractérisé en ce que l'un des deux premiers registres (1,3) est modifié par un chiffre (28) qui provient du comptage des trames de l'image de télévision.

12. Dispositif selon l'une quelconque des revendications précédentes, caractérisé en ce que la sortie de la séquence pseudoaléatoire s'éffectue sous forme parallèle (15-18) en prélevant plusieurs bits à la fois à différents étages de l'un des premiers registres à décalage (1).

13. Dispositif selon les revendications 8 et 12 ensemble, caractérisé en ce que les points de prélèvement de la séquence pseudoaléatoire (15-18), d'une part, et les points d'introduction des bits modificateurs d'autre part (21-25), sont disposés en quinconce.

14. Dispositif selon la revendication 12, caractérisé en ce que les bits de sortie sont modifiés linéairement (32), à partir de bits issus du deuxième (33) ou troisième registre (34).

15. Dispositif selon la revendication 14, caractérisé en ce que les bits de sortie sont modifiés deux fois (32+30) à partir des bits issus du deuxième (33) et du troisième registre (34).

16. Dispositif selon l'une des revendication 14 ou 15, caractérisé en ce que, dans le chemin d'au moins un bit issu du deuxième et/ou troisième registre, est inséré élément non linéaire (12,13).

17. Dispositif selon la revendication 16, caractérisé en ce que l'élément non linéaire est un compteur à bascule.

18. Dispositif selon l'une quelconque des revendications précédentes, utilisé pour le chiffrage d'une image de télévision, caractérisé en ce qu'une horloge à fréquence plus élevée est appliquée durant certaines périodes où la fourniture de codes n'est pas nécessaire, la sortie étant masquée durant cette période.

19. Dispositif selon la revendication 18, caractérisé en ce que l'horloge à fréquence plus élevée est appliquée pendant une durée déterminée elle-même de façon pseudo-aléatoire.

## Patentansprüche

1. Pseudozufallsreihengenerator mit zwei ersten, als Grundregister bezeichneten Schieberegistern (1,3), die mit Multiplikatoren versehen sind, wobei die Verschiebungen durch die Impulse eines Taktgebers gesteuert werden und die beiden ersten Register, deren Anfangsinhalt durch einen internen Schlüssel vorherbestimmt wird, miteinander verschaltet sind, das heißt, daß eine Verbindung zwischen dem Ausgang des einen (2) und dem Eingang des anderen (26) und umgekehrt (4,27) besteht, wobei in eine dieser Verbindungen ein Modifikatorelement (5) zwischengeschaltet ist, dadurch gekennzeichnet, daß das Modifikatorelement ein Gatter (5) ist, das Nullen in einen Teil der Schleife einschleusen kann und von einem Signal gesteuert wird, das von mindestens einem zweiten mit sich selbst verschalteten und von den beiden ersten Registern unabhängigen Schieberegister (33) ausgegeben wird.

2. Anordnung nach Anspruch 1, dadurch gekennzeichnet, daß sie ein zweites (33) und ein drittes Register (34) umfaßt, die beide von den beiden ersten Registern unabhängig sind, und daß das Gatter (5) ein UND-Gatter ist, das von einem von einem ODER-Gatter (8) ausgegebenen Signal gesteuert wird, dessen Eingängen Bits zugeführt werden, die jeweils vom zweiten (33) und vom dritten Register (34) stammen.

3. Anordnung nach Anspruch 2, dadurch gekennzeichnet, daß das zweite (33) und das dritte Register (34) sich gegenseitig modifizieren.

4. Anordnung nach Anspruch 3, dadurch gekennzeichnet, daß die gegenseitige Modifizierung des zweiten (33) und des dritten Registers (34) durch Zwischenschalten mindestens eines nichtlinearen Elements (10,11) erfolgt.

5. Anordnung nach Anspruch 4, dadurch gekennzeichnet, daß das nichtlineare Element ein Flipflop-Zähler ist.

6. Anordnung nach Anspruch 5, dadurch gekennzeichnet, daß zwei Flipflop-Zähler (10,11) vorhanden sind und daß ein Inverter (35) mit einem der Zähler (11) in Reihe geschaltet ist.

7. Anordnung nach einem der vorhergehenden Ansprüche, dadurch gekennzeichnet, daß mindestens eines der zwei ersten Register (1) linear durch Aufschaltung von Bits (21-25) aus einer Quelle außerhalb des ersten zu modifizierenden Registers modifiziert wird.

8. Anordnung nach dem vorhergehenden Anspruch, dadurch gekennzeichnet, daß die Aufschaltpunkte der Modifikatorbits so angeordnet sind, daß zwischen ihnen Blocks des ersten zu modifizierenden Registers (1) liegen, deren Grade verschieden und soweit wie möglich zueinander prim sind.

9. Anordnung nach Anspruch 7, dadurch gekennzeichnet, daß diese Quelle außerhalb des ersten zu modifizierenden Registers aus dem zweiten (33) und/oder dritten Register (34) besteht.

10. Anordnung nach dem vorhergehenden Anspruch, dadurch gekennzeichnet, daß jedes Modifikatorbit von einem UND-Gatter (21-25) ausgegeben wird, dessen Eingängen ein Bit aus dem zweiten Register (33) und ein Bit aus dem dritten Register (34) zugeführt wird.

11. Anordnung nach einem der vorhergehenden Ansprüche, die zum Verschlüsseln einer Fernsehsendung verwendet wird, dadurch gekennzeichnet, daß eines der beiden ersten Register (1,3) durch eine Zahl (28) modifiziert wird, die aus dem Zählen der Einzelbilder des Fernsehbilds erhalten wird.

12. Anordnung nach einem der vorhergehenden Ansprüche, dadurch gekennzeichnet, daß die Pseudozufallsreihe parallel (15-18) ausgegeben wird, indem mehrere Bits auf einmal verschiedenen Stufen eines der ersten Schieberegister (1) entnommen werden.

13. Anordnung nach Anspruch 8 und 12, dadurch gekennzeichnet, daß die Entnahmepunkte der Pseudozufallsreihe (15-18) einerseits und die Aufschaltpunkte der Modifikatorbits (21-25) andererseits versetzt angeordnet sind.

14. Anordnung nach Anspruch 12, dadurch gekennzeichnet, daß die Ausgangsbits mit Bits, die vom zweiten (33) oder dritten Register (34) ausgegeben werden, linear modifiziert werden (32).

15. Anordnung nach Anspruch 14, dadurch gekennzeichnet, daß die Ausgangsbits zweimal (32+30) mit Bits, die vom zweiten (33) und dritten Register (34) ausgegeben werden, modifiziert werden.

16. Anordnung nach Anspruch 14 oder 15, dadurch gekennzeichnet, daß in den Weg mindestens eines vom zweiten und/oder dritten Register ausgegebenen Bits ein nichtlineares Element (12, 13) zwischengeschaltet ist.

17. Anordnung nach Anspruch 16, dadurch gekennzeichnet, daß das nichtlineare Element ein Flipflop-Zähler ist.

18. Anordnung nach einem der vorhergehenden Ansprüche, die zum Verschlüsseln eines Fernsehbilds verwendet wird, dadurch gekennzeichnet, daß ein höherfrequenter Taktgeber während bestimmter Zeiten, zu denen keine Zuführung von Codes erforderlich ist, angelegt wird, wobei der Ausgang während dieser Zeit maskiert wird.

19. Anordnung nach Anspruch 18, dadurch gekennzeichnet, daß der höherfrequente Taktgeber während einer Zeit angelegt wird, die ebenfalls pseudozufällig bestimmt wird.

## Claims

1. A pseudo-random sequence generator arrangement, including two first basic shift registers (1,3) which are arranged as multipliers, the shifts being controlled by the pulses from a clock, the two first registers whose initial contents are preset by an internal key, being fed back to each other i.e. there is a connection between the output of the one (2) and the input of the other (26), and vice versa (4,27), a modifying member (5) being incorporated in one of these connections, characterized in that the modifying member is a gate (5) which can impose zeroes in a portion of the loop and is controlled by a signal supplied by at least a second shift register (33) fed back to itself and independently of the first two shift registers.

2. An arrangement as claimed in Claim 1, characterized in that it comprises the second register (33) and a third register (34) both of which are independent of the two first registers, an in that the gate (5) is an AND-gate controlled by a signal coming from an OR-gate (8) to whose inputs the bits are applied which are each supplied by the second register (33) and the third register (34).

3. An arrangement as claimed in 2, characterized in that the second (33) and the third register (34) are modified by each other.

4. An arrangement as claimed in Claim 3, characterized in that the mutual modification of the second (33) and the third register (34) is effected with insertion of at least a non-linear element (10-11).

5. An arrangement as claimed in Claim 4, characterized in that the nonlinear element is a bistable counter (T).

6. An arrangement as claimed in Claim 5, characterized in that there are two bistable counters (10,11) and that an inverter is (35) arranged in series with one of the counters (11).

7. An arrangement as c]aimed in any one of the preceding Claims, characterized in that at least one of the two first basic registers (1) is linearly modified by the insertion of bits (21-25) coming from a source which is external to the first register to be modified.

8. An arrangement as claimed in the preceding Claim, characterized in that the points at which the modifier bits are inserted are arranged in such a manner as to allow first register blocks (1) to be modified between them, whose orders are different and as much as this is possible, incommensurable.

9. An arrangement as claimed in Claim 7, characterized in that said source which is external to the first register to be modified is constituted by said second (33) and/or third register (34).

10. An arrangement as claimed in the preceding Claim, characterized in that each modifier bit is outputted by an AND-gate (22-25)to whose inputs a bit coming from the second register (33) and a bit coming from the third register (34) are applied.

11. An arrangement as claimed in any one of the preceding Claims, employed for encoding a television transmission, characterized in that one of the two first registers (1,3) is modified by a code (28) obtained from counting the fields of the television picture.

12. An arrangement as claimed in any one of the preceding Claims, characterized in that the output of the pseudo-random sequence is obtained in parallel form (15-18) by taking several bits simultaneously from different stages of one of the first shift registers (1).

13. An arrangement as claimed in Claims 8 and 12 together, characterized in that the points at which the pseudo-random sequence (15-18) is taken off on the one hand, and the points at which the modifier bits (21-25) are inserted on the other hand, are disposed in quincunx.

14. An arrangement as claimed in Claim 12, characterized in that the output bits are linearly modified (32), on the basis of the bits originating from the second (33) or third registers (34).

15. An arrangement as claimed in Claim 14, characterized in that the output bits are modified twice (32+30) on the basis of the bits originating from the second (33) and the third register (34).

16. An arrangement as claimed in Claims 14 or 15, characterized in that a non-linear element (12,13) is inserted in the path of at least one bit originating from the second an third register.

17. An arrangement as claimed in Claim 16, characterized in that the nonlinear element is a bistable counter.

18. An arrangement as claimed in any one of the preceding Claims, used for encoding a television picture, characterized in that a clock having a much higher frequency is used during certain periods in which the codes need not to be supplied, the output being concealed during this period.

19. An arrangement as claimed in Claim 18, characterized in that the clock of a much higher frequency is used during a predetermined duration which is determined in a pseudo-random manner.
